# EUROPEAN PATENT APPLICATION

(11) **EP 1 182 535 A1**
(43) Date of publication of application: **27.02.2002**
(21) Application number: 00117644.5
(22) Date of filing: 16.08.2000
(51) Int. Cl.: G06F 1/16, G06F 3/023, G06F 3/033, B60K 37/00

(54) **Haptic terminal**

(71) Applicant: Sony International (Europe) GmbH, 10785 Berlin (DE)
(72) Inventor: Michelitsch, Georg, c/o Advanced Technology Center, 70327 Stuttgart (DE)
(74) Representative: Müller . Hoffmann & Partner Patentanwälte

(57) **Abstract**

A haptic input/output unit for controlling a device is described which comprises a position monitoring means assigning an absolute or relative position of the haptic input/output unit to a mode of the device. Within a mode, the user might select an operation via a menu by pushing a menu popup button and tilting the whole terminal around one of its axes until the desired menu item is selected. Preferrably, the haptic input/output unit is used in a driver information system.

## Description

The invention relates to the field of haptic devices as a means to interact with a computerized system. In particular, the invention is directed to a haptic input/ output unit adapted for controlling a device.

The first examples of providing haptic feedback to users have been the result of work in the field of telerobotic systems. An early example would be the work by Goertz and Thompson [4] in the 1950's at the Argonne National Laboratory. The operator controlled a "master" arm that transmitted his commands to a remote slave. The "slave" follows the "master" input and interacts with the potentially harmful environment. Feedback signals received from sensors at the "slave" are transformed into force feedback felt by the user grasping the "master" arm [1].

In 1965 Ivan Sutherland envisioned an ultimate display, which combined a 3D graphic image of a virtual computer generated model with the corresponding haptic feedback to the user [8]. This led to a research project at the University of North Carolina at Chapel Hill called GROPE, which has as its goal the simulation of molecular docking forces. Early results were presented in 1971 [2], and a much-improved version followed in 1990 [3].

During the same period of time, a general method for presenting virtually created objects to a human user through touch was described in US Patent No. 3,919,691 assigned to Bell Laboratories. Here, a general method and apparatus is described that allows a user to feel computer generated (virtual) object scenes through a force feedback mechanism. Many haptic systems in the virtual reality community use the same principles as the system described in this document.

US Patent No. 5,844,392 assigned to Cybernet Systems in 1998 expands on the ideas expressed in US Patent No. 3,919,691 and introduces among other things the concept of a logical probe object associated with the haptic device. This probe moves as the haptic device moves and interacts with the virtual object scene. This interaction can be felt by the user through force feedback,

One of the first haptic desktop devices to be used with a personal computer was developed by Minsky and colleagues at the Massachusetts Institute of Technology. It used a two-degree of freedom joystick that could apply force feedback to the user in order to create the sensation of moving over various samples of sandpaper [7].

The first commercial systems were introduced in the early 1990's. The PHANToM arm [6] and the Impulse Engine [5] are two popular low cost solutions available today.

With similar devices various applications in the Virtual Reality domain were developed, such as VR training systems for the medical community, virtual reality video games at home and in arcades, and applications for the military such as aircraft trainers [1].

Another area for applying haptic feedback has been the augmentation of traditional graphical user interfaces (GUI). As described in WO97/21160 A2 assigned to Immersion Human Interface Corporation, force feedback is applied to a modified PC input device such as mouse or pen, whenever the user interacts through a cursor with familiar on-screen user interface components such as buttons, sliders, and menus. Therewith, the haptification of a general-purpose graphical user interface for desktop computers is described. In great detail several methods for adding haptic feedback to the operation of common user interface controls in a graphical user interface such as sliders, buttons, menus, and windows are shown. To that end, forces for the haptic input/output device are created that are based on a metric, which uses the distance between the on-screen cursor and a user interface widget. This way, an inherently two-dimensional user interface gains a third, haptic dimension.

The prior art discussed above either focuses on the realization of haptic input/ output devices as such, or it deals with applications of such devices to scenarios, where a real-world task is simulated in a virtual environment and force-feedback improves the "realism" of the simulation. The above mentioned WO 97/21160 A2 discloses an application of a haptic system in that the control of a computer operating system is improved. However, this disclosed system can not be operated with the sense of touch alone.

DE 196 08 869 A1 describes a user interface for a car that uses a multi-modal approach to input and output. Basically, the user first selects a command domain or mode by talking to the system. Once that mode is selected, the user can grab a user interface device with haptic feedback. By turning and pushing that device, parameters and values relevant to the selected mode can be adjusted with haptic feedback indicating, for example, discreet values and end-of-range positions by providing different force feedback sensations through a turning knob which is used to adjust the parameters and values.

However, this described application of a haptic system within a driver information system requires speech input to select a certain mode in connection with haptic input/output to adjust parameters and values relevant to the selected mode.

Therefore, it is the object underlying the present invention to provide an improved haptic input/output unit for controlling a device.

This object is solved with a haptic input/output unit according to independent claim 1. Preferred embodiments thereof are respectively defined in dependent claims 2 to 15. A preferred use of a haptic input/output unit according to the present invention is defined in independent claim 16.

The haptic input/output unit for controlling a device according to the present invention comprises a position monitoring means assigning an absolute or relative position of the haptic input/output unit to a mode of the device.

Therefore, according to the present invention, the device can be controlled solely via the haptic input/output unit independently of any speech input. In an embodiment as described by DE 196 08 869 A1 the haptic input/output unit according to the present invention has the advantage that the cognitive load on the driver is reduced, since the last selected mode has not to be remembered, but the context for the next interaction of the user is provided through the location of the terminal which the user can sense without having to take the eyes from the road.

Preferably, a linkage suspending the haptic input/output unit allows at least three degrees of freedom, namely the shifting of the haptic input/output unit along a plane or a free form surface and the rotation around an axis of the haptic input/output unit. Therewith, an uncomplicated and reliable way is provided to associate different modes with different positions as well as to indicate a selection of a mode or to navigate through a mode.

Further preferably, the haptic input/output unit according to the present invention comprises a display.

In this case a portal view of a virtual landscape modeling control options of the device and therein a virtual browsing object corresponding to the haptic input/ output unit might be shown. Preferably, the virtual landscape is shown at least during a device mode change.

Therefore, a user who is not familiar with the assignment of absolute positions of the haptic input/output unit to a mode of the device can easily become familiar therewith. Further, it is also possible for a user who has never used the system according to the present invention before to easily and accurately control the device, since a visual guidance is given in respect to the control functions of the device.

Further preferably, the haptic input/output unit according to the present invention comprises at least one soft key associated to a predetermined mode or command to control the device. Further preferably, the at least one soft key is user-programmable.

Therewith, the present invention allows to assign certain modes or commands for the device control to directly accessible keys which can be actuated by the user to provide a fast and easy access without navigation through the virtual landscape. Further, the quick accessing of commands within a given mode is advantageously realizable with the present invention.

Still further preferably, the haptic input/output unit according to the present invention comprises at least one mode selection release control button to enable the shifting of the haptic input/output unit into a position corresponding to a different device mode. Therewith, an unwanted or uncontrolled shifting of the haptic device is prevented in that the user first has to actuate the mode selection release control button before a shifting of the haptic input/output unit can be performed.

Still further preferably, within a mode one of a corresponding subset of commands of said device is selectable via said haptic input/output unit. Further, at least one menu activation button might be provided in this case to activate a menu of a subset of commands within a device mode upon its pressure. Therewith, an easy and reliable way is provided to initiate the selection of a command on basis of a user action.

In this case, preferably the release of the menu activation button triggers a selected command. Therewith, a fast access to a particular command can be assured.

Still further preferably, the haptic input/output unit according to the present invention comprises at least one analog dial to control analog values of the device. Therewith, cumbersome scrolling through digitized analog values is prevented. Further, by provision of an analog dial also the problem is avoided to determine an appropriate stepwidth for such digitized analog values.

Preferably, the haptic input/output unit according to the present invention comprises a help facility to explain the function of a key, button and/or dial in the display when touching said key, button and/or dial. To provide an association with the touched key, button and/or dial, preferably an illuminated channel is displayed in-between the explained key, button and/or dial and the corresponding explanation on the display. Alternatively to the illuminated channel a corresponding means might be provided. Therewith, it is possible to provide such an explanation for several controls, i. e. key(s), button(s) and/or dial(s), simultaneously.

Further preferably, said haptic input/output unit according to the present invention has a symmetric layout. Therewith, the haptic input/output unit according to the present invention can be used by left-handed and right-handed users in the same convenient way. Further, in case the haptic input/output unit according to the present invention is used in a car environment, the driver as well as the co-pilot may use the haptic terminal in the same convenient way when it is arranged in-between them. Also, in such a case, it is not necessary to provide different terminals for left-hand-driven or right-hand-driven cars.

The haptic input/output unit according to the present invention is preferably used in a driver information system.

Therewith, the present invention allows the driver of a car to operate a driver information system which includes but is not limited to the following functions: radio, navigation, climate, control, etc., without having to take the eyes off the road. The user "feels" the way through the system via haptic feedback similar to the way one can interact with the mechanical controls of a car without having to look at the controls.

To that end, the information maintained by the system is modeled as data laid out on a virtual landscape in 3D space. The integrated screen of the input/output device shows a portal view of that landscape. Information logically belonging to a certain domain, e. g. climate control, is grouped together. The user moves from one such group to another by moving an input device along predefined paths that might resemble a "shift gate". Within a mode, the user issues a command e.g. by pressing a menu activation button and tilting the whole input device in order to select one item from the menu as described in the parallel application "Haptic Device Control" of the applicant which content is incorporated by reference herewith.

Further features and advantages of the present invention will become apparent from the following detailed description of a preferred embodiment thereof taken in conjunction with the accompanying drawings, wherein
- **Fig. 1**: shows a preferred realization of a haptic user interface according to the present invention for a driver information system scenario, and
- **Fig. 2**: shows an example of an overlaid help graphic on the terminal screen of the haptic user interface shown in Fig. 1.

The exemplary described preferred embodiment according to the present invention comprises a terminal that integrates a flat display 2 with five soft keys 3, a set of two menu activation buttons 5, two mode selection release controls 4 and an analog dial 6 for adjusting volume and other analog values. The flat display 2 is arranged in center portion of a front panel of the terminal, the soft keys 3 are arranged on the top of the terminal, and the menu activation buttons 5 are provided on both sides of the soft keys 3, but in ear like parts of the front panel extending over the top surface of the terminal. In-between the menu activation buttons 5 and the soft keys 3 a respective mode selection release control 4 is provided in a recess of the top area of the terminal. The analog dial is provided in the middle of the bottom part of the terminal, i. e. beneath the flat display 2. The menu activation buttons 5 are arranged in ear-like parts of the terminal so that a user can easily reach one of them with the thumb in case the user graps the terminal with one hand. Similar, a mode selection release control 4 and a soft key 3 can easily be activated by the user's thumb. The user can further easily differentiate in-between the soft keys 3, a mode selection release control 4 and a menu activation button 5 due to their different position and arrangement on the terminal.

This terminal as a whole serves as haptic input/output unit, i.e. to haptically input commands and to output haptic sensations to a user who holds the terminal with one or two hands. The haptic output might include vibrating or force feedback sensations. Of course, also other generally known haptic output techniques might be applied.

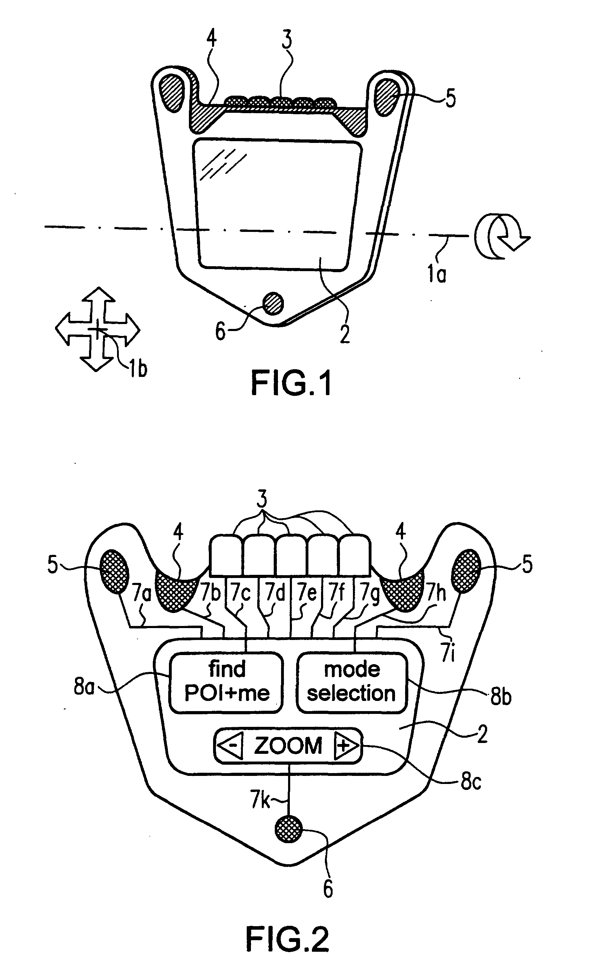

The whole assembly is suspended on a linkage that allows three degrees of freedom, namely shifting along a plane 1a indicated by double arrows in Fig. 1 and rotating it around an axis 1b that might be parallel to the axles of a car. Variations of the device can provide additional degrees of freedom such as rotations along the symmetry axis of the device. Alternatively, other appropriate means might define the possible degrees of freedom and allow the monitoring of the position and/or orientation of the haptic input/output unit.

The user can select a new mode by first touching a mode selection release control 4, and then shifting the whole assembly along the paths that connect the modes which are embedded in a landscape, until the device rests in the selected mode position. During the mode selection movement, the display 2 shows a portal view of the whole landscape which is panned corresponding to the shifting motion performed by the operator.

Within a mode, the user might select an operation via a menu by pushing one of the menu popup buttons and tilting the whole terminal around the axis 1b until the desired menu item is selected. The button release event might then trigger the operation selected and the terminal returns to the resting position.

The soft keys 3 are used for short cuts by associating a certain function that can be selected via menus with a soft key. An intuitive way of doing so might require a two handed operation. With one hand, a menu item is selected and before releasing the menu activation button 5, the user also presses one of the soft keys 3 with the other hand. This results in associating a menu item with a soft key 3. Naturally, this operation can only be performed safely by the driver when he is not driving.

Alternatively, the soft key programming can also be performed in an other convenient way, e. g. the user selects a command from the menu by tilting the haptic terminal around the axis 1b until the command in question is highlighted by the system. While holding the haptic input/output terminal in this position with one hand, the user can press down one of the soft keys 3 in order to establish an association between the last executed command and the respective soft key 3. From then on, whenever the user presses this soft key 3, the associated function will be performed.

The analog control 6 at the bottom of the terminal is used for all operations that benefit from being given an analog value. These include volume control and zoom factor input but can also be used for selecting a value from a given range, such as a character in an alphabet or a number in a set of numbers. This analog control 6 could also provide haptic force feedback.

Additionally, an integrated help facility might be available within the terminal: Therefore, preferably, each control, i.e. each soft key 3, selection release control 4, menu activation button 5, and the analog control 6, placed on the user interface device is "connected" to the screen 2 by a respective channel 7a - 7k made of a material which can be illuminated. As the user touches a respective control the respective associated channel 7a - 7k is illuminated and at the point where the channel reaches the display 2, a semi transparent overlay graphic is placed over the regular screen display as shown in Fig. 7. This graphic describes the function that can be performed when activating a respective control. When the user removes his hand from the control the overlay graphics disappears.

Fig. 7 exemplary shows the functions associated to the soft key 3 arranged outermost left, namely "find POI (Point of Interest) + me" 8a, the right selection release control 4 "mode selection" 8b, and the analog control 6 " 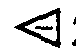 ZOOM 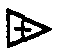 " 8c.

Of course, in case the flat display 2 extends into the vicinity of a certain control the respective above-described illuminated channel 7a - 7k might be replaced by a line displayed on the flat display 2. Alternatively, the help facility might be provided only for one control at a time in which case no illuminated channel or equivalent has to be provided.

The help and guidance feature might be integrated into the operation of the control in the following way. Each control supports the following states: Touch, press, and release.

On touching the control the guidance info appears. On pressing the control guidance info disappears and the control is activated, which can mean selection of a command, entering a special mode of operation and so on. On releasing the control, the activated function is performed and the device returns to its normal state.

The described multi-stage mechanism for the controls is similar to the way shutter release buttons in SLR (Single Lens Reflex) cameras work. Accordingly, the same mechanical and/or inductive means of realizing such behavior can be utilized for the haptic terminal according to the present invention.

Further additionally, a symmetric button layout may be provided, as shown in Figs. 6 and 7. All controls of the terminal are laid out in symmetry to its vertical axis. This design ensures that the devices can be mounted in the middle of the dashboard of a car, and yet both the driver and co-pilot can operate the device equally well. Secondly, there is no need to provide different terminals for left-handle and right-handle cars.

### References

1. Burdea, C. Grigore: "Force and Touch Feedback for Virtual Reality". John Wiley & Sons, Inc. 1996.
2. Batter, J. and F. Brooks Jr.: "GROPE-I: A computer display to the sense of feel". Proceedings of ITIP Congress 1971, pp. 759- 763.
3. Brooks, F. Jr., M. Ouh-Young, J. Batter and A. Jerome. "Project GROPE - Haptic Displays for Scientific Visualization". Computer Graphics, Vol. 24, No. 4, 1990, pp. 177 - 185.
4. Goertz, R. and R. Thompson. "Electronically controlled manipulator". Nucleonics 1954, pp. 46- 47.
5. Jackson, B. and L. Rosenberg. "Force Feedback and Medical Simulation". Interactive Technology and the New Paradigm for Healthcare, IOS Press, Amsterdam, Chapter 24, pp. 147 - 151, January 1995.
6. Massie, T. and K. Salisbury. "The PHANToM Haptic Interface: A Device for Probing Virtual Objects". ASME Winter Annual Meeting, DSC-Vol. 55-1, ASME, New York 1994, pp. 295- 300.
7. Minsky, M., M. Ouh-Young, O. Steele, F. Brooks Jr. and M. Behensky. "Feeling and Seeing: Issues in Force Displays". Computer Graphics, ACM Press, Vol. 24, No. 2, March 1990, pp. 235 - 243.
8. Sutherland, I. "The Ultimate Display". Proceedings of International Federation of Information Processing 1965, pp. 506- 508.

## Claims

1. Haptic input/output unit for controlling a device, **characterized by** a position monitoring means assigning an absolute or relative position of the haptic input/output unit to a mode of the device.

2. Haptic input/output unit according to claim 1, **characterized by** a linkage suspending the haptic input/output unit allowing at least three degrees of freedom, namely the shifting of the haptic input/output unit along a plane (1b) or free form surface and the rotation around an axis (1a) of the haptic input/ output unit.

3. Haptic input/output unit according to claim 1 or 2, **characterized by** a display (2).

4. Haptic input/output unit according to claim 3, **characterized by** the display of a portal view of a virtual landscape modelling control options of the device and therein a virtual browsing object corresponding to the haptic input/ output unit.

5. Haptic input/output unit according to claim 4, **characterized in that** the virtual landscape is shown at least during a device mode change.

6. Haptic input/output unit according to anyone of claims 1 to 5, **characterized by** at least one soft key (3) associated to a predetermined mode or command to control the device.

7. Haptic input/output unit according to claim 6, **characterized in that** the at least one soft key (3) is user-programmable.

8. Haptic input/output unit according to anyone of claims 1 to 7, **characterized by** at least one mode selection release control button (4) to enable the shifting of the haptic input/output unit into a position corresponding to a different device mode.

9. Haptic input/output unit according to anyone of claims 1 to 8, **characterized in that** within a mode one of a corresponding subset of commands of said device is selectable via said haptic input/output unit.

10. Haptic input/output unit according to claim 9, **characterized by** at least one menu activation button (5) to activate a menu of a subset of commands within a device mode upon its pressure.

11. Haptic input/output unit according to claim 10, **characterized in that** the at least one menu activation button (5) triggers a selected command upon its release.

12. Haptic input/output unit according to anyone of claims 1 to 11, **characterized by** at least one analog dial (6) to control analog values of the device.

13. Haptic input/output unit according to anyone of claims 3 to 5 and anyone of claims 6 to 12, **characterized by** a help facility explaining the function of a key (3), button (4, 5) and/or dial (6) of the haptic input/output unit on the display (2) when touching said key (3), button (4, 5) and/or dial (6).

14. Haptic input/output unit according to claim 13, **characterized in that** an illuminated channel (7c, 7h, 7k) is displayed in-between the explained key (3), button (4, 5) and/or dial (6) and the corresponding explanation (8a - 8c) on the display (2).

15. Haptic input/output unit according to anyone of claims 1 to 14, **characterized by** a symmetric layout.

16. Use of a haptic input/output unit according to anyone of claims 1 to 15 in a driver information system.
